(19) **Europäisches Patentamt**

**European Patent Office**

**Office européen des brevets**

(11) Veröffentlichungsnummer : **0 385 057 B1**

(12) **EUROPÄISCHE PATENTSCHRIFT**

(45) Veröffentlichungstag der Patentschrift :
07.08.91 Patentblatt 91/32

(51) Int. Cl.⁵ : **B60C 27/12**

(21) Anmeldenummer : **90100081.0**

(22) Anmeldetag : **03.01.90**

(54) Gleitschutzkette.

(30) Priorität : 01.03.89 DE 3906486

(43) Veröffentlichungstag der Anmeldung :
05.09.90 Patentblatt 90/36

(45) Bekanntmachung des Hinweises auf die
Patenterteilung :
07.08.91 Patentblatt 91/32

(84) Benannte Vertragsstaaten :
AT BE CH DE DK ES FR GB GR IT LI LU NL SE

(56) Entgegenhaltungen :
EP-A- 0 242 435
CH-A- 649 505
DE-C- 2 731 296
DE-U- 8 902 454

(56) Entgegenhaltungen :
FR-A- 2 314 065
FR-A- 2 458 409
FR-A- 2 630 682
US-A- 1 615 570

(73) Patentinhaber : CONTIWEISS WEISSENFELS
GMBH & CO. KG
Jülicher Strasse 418
W-5100 Aachen (DE)

(72) Erfinder : Franklin, Charles R.
Verdi No. 5
I-33010 Fusine Valromana(Tarvisio) Udine (IT)

(74) Vertreter : Geyer, Werner, Dr.-Ing.
Patentanwaltskanzlei Dr. Werner Geyer
Hermann-Vogel-Strasse 12
W-8000 München 40 (DE)

## Beschreibung

Die Erfindung bezieht sich auf eine Gleitschutzkette für Fahrzeugreifen, mit einer inneren und einer äußeren Seitenhalterung, die mittels über die Lauffläche des Fahrzeugreifens anlegbarer Kettenstrangabschnitte miteinander verbunden sind, wobei die äußere Seitenhalterung einen Halterungsstrang aufweist, der mit mindestens einem zwischengeschalteten elastischen Dehnglied versehen, an seinem einen Ende an eine Spannkette angeschlossen und an seinem anderen Ende mit einer Sperreinrichtung für die Spannkette ausgestattet ist, die bei Durchlauf der Spannkette diese entgegen der Spannrichtung mittels eines lösbaren Sperrelementes verriegelt.

Gleitschutzketten werden üblicherweise unmontiert im Fahrzeug mitgeführt und erst dann eingesetzt und montiert, wenn dies wegen der Fahrbahnverhältnisse erforderlich wird, wobei die Montage meist bei für den Benutzer unangenehmen Außenbedingungen erfolgen muß. Aus diesem Grunde wird angestrebt, daß Gleitschutzketten auch bei ungünstigen Witterungsbedingungen rasch und insbesondere auch möglichst unkompliziert montiert werden können, um auch ungeübten Personen das Anlegen von Gleitschutzketten zu ermöglichen, ohne daß hierbei zu große Handhabungsprobleme auftreten.

In der Vergangenheit wurden schon viele Vorschläge gemacht, um ein erleichtertes Anlegen von Gleitschutzketten zu ermöglichen, wobei gerade in den letzten Jahren deutliche Fortschritte hierzu erzielt werden konnten.

So wird z.B. bei einer bekannten Gleitschutzkette (DE-A-2556115 ; Fig. 12 und 13) für die innere, d.h. auf der Innenseite des Fahrzeugreifens anlegbare seitliche Halterung der Kette ein elastisch aufspreizbarer Federbügel eingesetzt, an dessen einem freien Ende eine Spannkette befestigt ist, die durch eine Umlenköse am anderen freien Ende des Federstahlbügels hindurchläuft und von dieser quer über die Reifenlauffläche zur Reifenaußenseite geführt ist, wo ihr freies Ende dann in geeigneter Form befestigt werden kann. Bei dieser bekannten Gleitschutzkette ist ein relativ rasches Anbringen der inneren Halterung sowie ein Spannen derselben durch den Benutzer von der Außenseite des Fahrzeugrades her möglich. Neben dem Spannen der inneren Halterung muß allerdings auch noch die äußere Seitenhalterung ebenfalls gespannt werden, um einen sicheren Sitz der Kette auf dem Rad zu gewährleisten. Darüberhinaus ist eine reine Standmontage nicht möglich, da die Kette, ist sie einmal auf dem Rad befestigt, nach einer (wenn auch nur kurzen) Fahrstrecke nachgespannt werden muß.

Bei einer anderen bekannten Gleitschutzkette (EP-A2-0155988) besteht die innere Seitenhalterung ebenfalls aus einer zum Überstreifen der Seitenhalterung über die Lauffläche des Fahrzeugrades aufspreizbaren Konstruktion, bei der mehrere starre Metallbügel, die an ihren Enden verschwenkbar aneinander befestigt sind, unter Wirkung von Federkräften in eine ringförmig geschlossene Endform der inneren Halterung hin vorgespannt werden. Dabei sind an den beiden freien Enden der jeweils letzten seitlichen Halterungsbügel Verschlußelemente angebracht, die es ermöglichen, daß sich die innere Halterung beim Zusammenfedern (nach dem Überstülpen über die Reifenlauffläche) selbsttätig (in ihrer ringförmigen Endform) verriegelt. Bei dieser bekannten Gleitschutzkette ist eine besonders rasche Montage möglich, da ein Spannen der inneren Halterung nicht mehr erforderlich ist ; die äußere Seitenhalterung muß vom Benutzer allerdings ebenfalls noch gespannt werden.

Grundsätzlich gilt, daß neben einer schnellen Montage zusätzlich auch ein fest gespannter Sitz der Kette auf dem Fahrzeugrad wichtig ist, um eine gute Funktionalität der Kette zu gewährleisten. Denn gute funktionelle Eigenschaften einer Gleitschutzkette bei Betrieb bedeuten, daß nicht nur die statischen, sondern insbesondere auch während des Betriebes auftretende dynamische Belastungen der Kette möglichst gut ausgeglichen werden können, daß ferner ein guter Kettensitz während des praktischen Einsatzes auch bei Auftreten unterschiedlichster Belastungen aufrechterhalten werden kann und gleichzeitig die Laufgeräusche der Kette, die stark durch das dynamische Verhalten der Kette beeinflußt werden, möglichst gering gehalten werden können.

Für das Spannen der äußeren Seitenhalterung von Gleitschutzketten ist es bekannt (etwa DE-A-2731296), dort mindestens ein elastisches Dehnelement vorzusehen, das beim Spannen der Kette seinerseits gespannt wird und infolge seiner elastischen Rückstellkraft sicherstellt, daß die Kette im praktischen Einsatz immer gespannt bleibt. Dies ist wichtig, da unter Einwirkung der auftretenden dynamischen Kräfte auch noch Änderungen im Kettensitz eintreten können, die zu Entspannungen am äußeren Halterungsstrang führen.

Es ist ferner bekannt (US-A-1615570), anstelle von Dehnelementen Sperrelemente einzusetzen, durch die eine an einem Ende der äußeren Seitenhalterung angeschlossene Spannkette hindurchgeführt wird und die verhindern, daß nach dem Spannen der äußeren Halterung die Spannkette (und damit die an ihr befestigte Seitenhalterung) entgegen der Spannrichtung zurücklaufen könnte.

Allgemein aber gilt, daß bislang die Anforderungen an die Erfordernisse der Funktionalität und der Montagegeschwindigkeit, die an moderne Ketten gestellt werden müssen, stets zu einem Kompromiß zugunsten einer der beiden angeforderten Eigenschaften ausfallen mußten, so daß Ketten mit besonders guten funktionellen Eigenschaften keine leichte und schnelle Montage aufweisen oder umgekehrt.

Aus dem IT-U 210268 ist eine Gleitschutzkette der eingangs genannten Art mit einem Spannsystem für die äußere Halterung bekannt, bei dem die äußere Seitenhalterung sowohl mit einer zwischengeschalteten Elastizität versehen ist, wie auch zusätzlich eine Rücklauf-Sperre für die Spannkette aufweist. Bei dieser Gleitschutzkette ist aber die innere Seitenhalterung als kräftiges Drahtseil ausgebildet, das bei der Montage mit seinem einen Ende zunächst auf die Rückseite des Fahrzeugrades gebracht und um diese herumgeführt werden muß, bis es am anderen Ende des Fahrzeugrades wieder nach vorne gelangt. Anschließend müssen die beiden freien Enden des Drahtseils aneinander mittels eines für ungeübte Personen nicht einfach zu handhabenden Verschlusses befestigt werden. Um das Drahtseil schließlich auf die Innenseite des Fahrzeugrades verbringen zu können, ist es für den Benutzer erforderlich, das nach Verbinden seiner Enden geschlossene Drahtseil mit beiden Händen seitlich zu ergreifen, es in eine oval-längliche Form zu ziehen, es anschließend am Fahrzeugrad nach oben zu führen und schließlich den außen und oben liegenden Teil des Drahtseils über die obere Lauffläche des Fahrzeuges bis auf die Rückseite des Fahrzeugrades zu bringen. Erst nach dieser recht umständlichen Handhabungsweise kann die Montage und das Spannen der äußeren Seitenhalterung vorgenommen werden. Die äußere Seitenhalterung besteht dabei aus einem von einer Kette gebildeten Halterungsstrang, der zwei (getrennte) Einzelabschnitte aufweist, die mit ihren Enden zusammengehakt werden müssen, um den gesamten Spannstrang auszubilden. Dieses Zusammenhaken der beiden Abschnitte der äußeren Seitenhalterung kann allerdings erst erfolgen, nachdem die innere Seitenhalterung auf die Rückseite des Fahrzeugrades gebracht ist. Dasselbe gilt für das Einfädeln des Spannstranges durch die Rücklaufsperre, das erforderlich ist, weil vor dem Überstreifen der inneren Halterung über das Fahrzeugrad die Spannkette aus der Sperreinrichtung herausgezogen werden muß, um ihr Überstreifen überhaupt zu ermöglichen. Bei der bekannten Gleitschutzkette ist die Spannkette an einem Ende des Halterungsstranges befestigt, während an dessen anderem Ende unter Zwischenschaltung einer Elastizität in Form einer Schrauben-Zugfeder die Rücklaufsperre angebracht ist, die ein lösbares Sperrelement aufweist, das mit der Spannkette in Eingriff bringbar ist.

Diese bekannte Gleitschutzkette weist zwar durch die Kombination von Dehn- und Spannelement an der äußeren Seitenhalterung sowie durch ihre Gesamtkonstruktion gute funktionelle Eigenschaften auf, ist aber nur sehr umständlich und relativ langsam montierbar : denn hierfür müssen die Verbindungen an den Enden der inneren Seitenhalterung, der beiden Abschnitte des Halterungsstrangs der äußeren Seitenhalterung sowie der Spannkette mit der Sperrkette gelöst werden, erst anschließend kann das Stahlseil der inneren Halterung um das Fahrzeugrad herumgeschoben werden, bis es wieder nach vorne gelangt, wonach in bestimmten Einzelabläufen die genannten Verbindungen erneut hergestellt werden müssen. Dabei ist es, wie bereits erwähnt, auch erforderlich, daß vor der Montage die Spannkette aus der Rücklaufsperre herausgezogen wird, später aber wieder dort eingefädelt werden muß, bevor das Spannen der äußeren Halterung erfolgen kann. Für alles ist ein erhebliches Maß an Geschicklichkeit erforderlich, wobei die Vielzahl der auszuführenden Handgriffe z.B. mit gefütterten Handschuhen überhaupt nicht durchführbar sind. Zudem ist das Herstellen der genannten Verbindungen bei ungünstigen Lichtbedingungen ohne Zuhilfenahme einer extra Lichtquelle kaum möglich. Um ein Überspannen der Dehnglieder durch energischen Zug am freien Ende der Sperrkette zu vermeiden, ist im Inneren der die Dehnglieder bildenden Spiralfedern ein im entspannten Zustand der Spiralfeder lose hängender Kettenabschnitt angebracht, der das Längen der Spiralfeder nur bis zu einer gewissen Grenze zuläßt. Sind die Dehnglieder aber nicht bis zu ihrer Belastungsgrenze angezogen, kann es innerhalb jeder Spiralfeder durch den innerhalb der Feder vorliegenden, ungespannten Kettenabschnitt zu unangenehmen Geräuschentwicklungen kommen. Daneben können unter den beim Fahren in den Ketten auftretenden dynamischen Beanspruchungen infolge der eingesetzten Spiralfedern unerwünschte Schwingungen auftreten, die ebenfalls das Laufgeräusch der Gleitschutzkette erhöhen. Weiterhin liegen die Spiralfedern gegen die äußere Seitenwand des Fahrzeugreifens an, wodurch es zu unerwünschten Scheuereffekten kommen kann.

Ausgehend hiervon liegt der Erfindung die Aufgabe zugrunde, eine solche bekannte Kette dahingehend weiterzubilden, daß sie bei noch verbesserter Funktionalität eine erheblich erleichterte und beschleunigte Montage ohne Verkomplizierung ihres Aufbaus zuläßt.

Diese Aufgabe wird bei einer Gleitschutzkette der eingangs genannten Art dadurch gelöst, daß die innere Seitenhalterung als ein zum Überstreifen über die Reifenlauffläche elastisch aufspreizbarer, ringförmig-offener Federstahlbügel ausgebildet ist, der an seinen Enden mit Schließgliedern versehen ist, die nach dem Überstreifen des Federstahlbügels über die Reifenlauffläche beim anschließenden Einfedern desselben in seine Ausgangsform (infolge seiner elastischen Rückstellkräfte) bzw. bei einem dann vom Benutzer bewirkten Zusammenführen der Enden des Federstahlbügels miteinander verriegeln und den Federstahlbügel damit in einer geschlossenen Endform arretieren und halten, daß ferner der Halterungsstrang als ein durchgehender, nicht-unterbrochener (und auch nicht-unterbrechbarer) Strang ausgebildet ist, daß ferner die an ihm zwischengeschaltete Elastizität als Dämpfungselement ausgebildet ist, und daß die durch die Sperreinrichtung hindurchgeführte Spannkette mit einer Einrichtung versehen ist, die ein Durchlaufen ihres freien Endes durch die Spanneinrichtung verhindert, so daß die Spannkette stets in die Sperreinrichtung eingefädelt ist und aus dieser nicht herausgezogen werden kann.

Durch die Ausbildung der inneren Seitenhalterung als ringförmiger, elastisch-aufspreizbarer Federstahlbügel mit an seinen Enden angebrachten Verriegelungselementen, die sich bei einem Annähern der beiden Enden des Federstahlbügels aneinander verriegeln, wird erreicht, daß eine sehr rasche Montage der inneren Halterung erfolgen kann und ein Nachspannen derselben nicht mehr erforderlich ist. Darüberhinaus bildet der Federstahlbügel eine besonders stabile innere Halterung aus, was für einen guten Sitz der Kette und auch für das Laufverhalten bei Betrieb wichtig ist. Bei der erfindungsgemäßen Gleitschutzkette ist der Halterungsstrang der äußeren Seitenhalterung nicht, wie beim gattungsgemäßen Stand der Technik, aus zwei getrennten Abschnitten gebildet, die bei der Montage zunächst voneinander getrennt und dann wieder aneinander angeschlossen werden müssen, um die Montage fertigstellen zu können. Vielmehr wird bei der Erfindung ein durchgehender, ununterbrochener Halterungsstrang eingesetzt, d.h. der Halterungsstrang besteht aus einer durchgehenden, nicht in Abschnitte auftrennbaren Stranglänge, in der auch das bzw. die elastische(n) Dehnglied(er) in Form von Dämpfungsgliedern enthalten sind.

Da bei der Erfindung die Spannkette, welche die beiden freien Enden des durchgehenden Halterungsstranges miteinander verbindet, aus der Rücklaufsperre nicht mehr freikommen kann, sondern stets eingefädelt bleibt, entfällt bei der Montage auch das umständliche Einfädeln. Dabei hat die Spannkette eine solche Länge, daß sie beim Aufspreizen des Federstahlbügels und bei dessen Überschieben über den Fahrzeugreifen keine Behinderung von der Außenseite der Kette her darstellt.

Bei der Montage der erfindungsgemäßen Gleitschutzkette wird zunächst der Federstahlbügel in bekannte Weise auseinandergespreizt, über den Reifen geführt und losgelassen. Das Verriegeln seiner Schließglieder erfolgt sodann bevorzugt selbsttätig beim Zusammenfedern der Enden des Federstahlbügels, wenn dieser ausreichend stark in seine geschlossene Lage hin vorgespannt ist, oder, falls keine so große Vorspannung vorliegt, dadurch, daß der Benutzer die beiden Enden des Federstahlbügels soweit einander annähert, daß die Schließglieder miteinander in verriegelnden Eingriff treten. Nunmehr braucht lediglich nur noch die Spannkette an ihrem freien Ende angezogen zu werden : sie läuft dabei durch die Sperreinrichtung hindurch und zieht die beiden Enden des Halterungsstrangs unter gleichzeitiger Längung der Dehnelemente gegeneinander. Hierdurch wird ein straffer Sitz der äußeren Halterung erreicht, der auch noch während der Fahrt infolge der gespannten Dehnglieder und der Rücklaufsperre gewährleistet bleibt. Letztlich wird, wie auch bei der gattungsgemäßen Kette, das aus der Sperreinrichtung herausgezogene freie Ende der Spannkette geeignet an der äußeren Seitenhalterung befestigt, wobei durch Zwischenschaltung eines weiteren elastischen Dehnungselementes, das gleichzeitig auch noch als Dämpfungsglied ausgebildet ist, auch bezüglich dieses äußeren, hinter der Sperreinrichtung verlaufenden Endes der Spannkette ein straffer Sitz gut gewährleistet bleibt.

Bei der erfindungsgemäßen Gleitschutzkette muß keinerlei Verbindung zwischen irgendwelchen Abschnitten des Halterungsstrangs hergestellt oder das Ende der Spannkette in die Sperreinrichtung eingefädelt werden. Auch zum Schließen der als Federbügel ausgebildeten inneren Seitenhalterung muß der Benutzer, da es nicht selbsttätig erfolgt, nur wenige, einfache Handgriffe beitragen. Die erfindungsgemäße Gleitschutzkette läßt sich bei ungünstigen Witterungsbedingungen, so auch etwa bei größter Kälte, durch den Benutzer selbst mit groben oder gefütterten Fausthandschuhe montieren, ohne daß er diese auszuziehen müßte. Selbst bei Dunkelheit oder ungünstigen Lichtverhältnissen, bei denen die Einzelteile der Kette optisch nicht gut erkennbar sind, läßt sich allein durch schnelles Abtasten sowie durch den Widerstand, den die voll durch die Sperreinrichtung durchgezogene Spannkette einem weiteren Zug entgegensetzt, feststellen, daß die erfindungsgemäße Gleitschutzkette ordnungsgemäß sitzt.

Auch das Lösen der erfindungsgemäßen Gleitschutzkette ist deutlich einfacher als beim gattungsgemäßen Stand der Technik.

Neben der deutlich erleichterten und beschleunigten Montage weist die erfindungsgemäße Kette aber auch einen gegenüber der gattungsgemäßen Gleitschutzkette sogar noch vereinfachten Aufbau auf.

Darüberhinaus ist bei der erfindungsgemäßen Gleitschutzkette auch deren Funktionalität unter Berücksichtigung der bei Betrieb auftretenden dynamischen Kräfte verbessert : durch die Ausbildung der elastischen Dehnelemente als gleichzeitige Dämpfungsglieder wird grundsätzlich erreicht, daß die bei Betrieb auftretenden wechselnden dynamischen Belastungen und Spannungen, insbesondere auch wenn relativ große Belastungsunterschiede rasch aufeinanderfolgen, im gespannten Kettensitz zu einer besonders ausgeglichenen Kräfteaufnahme führen, wobei die dabei an den Elastizitäten (und damit an den gesamten Kettensträngen) auftretenden Ausgleichsbewegungen wegen der Dämpfungsglieder insgesamt kleiner als bei Vorhandensein reiner Elastizitäten ausfallen. Diese Dämpfungsglieder beeinflussen darüberhinaus grundsätzlich auch sehr positiv das Laufgeräusch der Kette und verhindern das Auftreten unerwünschter Schwingungen, insbesondere im äußeren Halterungsstrang, was auch noch zusätzlich durch die Verwendung des Federstahlbügels als innere Seitenhalterung unterstützt wird, da dieser als relativ großes, steifes Element an der Fahrzeugrad-Innenseite nicht nur ebenfalls einen Beitrag für einen guten Kettensitz leistet, sondern daneben auch das Auftreten unerwünschter Schwingungen in der montierten Kette erschwert.

Die erfindungsgemäße Gleitschutzkette weist vorzügliche funktionelle Eigenschaften auf und ermöglicht dennoch eine bemerkenswert leichte und rasche Montage ; sie sitzt gut und kann sowohl während der statischen Montagephase, wie auch während der sich anschließenden dynamischen Belastungsphase bei Gebrauch stets in gespanntem Zustand gehalten werden, um die Impulse der Beanspruchungen, die vom Laufnetz bei Gebrauch übertragen werden, elastisch (gedämpft) aufzunehmen.

Gleichzeitig weist die erfindungsgemäße Gleitschutzkette ein gewisses Toleranzfeld auf, das es gestattet, die Verwendung der Ketten auf sogar unterschiedlichen Reifenabmessungen zu ermöglichen.

Gemäß einer bevorzugten Ausgestaltung der Erfindung ist jedes Schließglied an einem Ende der als Federstahlbügel ausgebildeten inneren Halterung als flache Platte geformt, die eine aus ihrer Ebene herausgebogene Verhakungszunge aufweist, die entgegen der Schließrichtung des Federstahlbügels weist und der benachbart eine Aussparung in der Platte vorgesehen ist, die beim Zusammenfedern des Federstahlbügels in Eingriff mit der Verhakungszunge des jeweils anderen Schließgliedes bringbar ist, daß ferner die Verhakungszungen jeweils zur gleichen Seite des Federstahlbügels hin vorspringen und in Richtung des Zusammenfederns des Federstahlbügels auf der jeweiligen Platte vor den Aussparungen angebracht sind. Besonders bevorzugt werden die beiden Schließglieder spiegelsymmetrisch zueinander ausgebildet. Bei diesen Ausführungsformen liegen die plattenförmigen Schließglieder in der Ebene des Federstahlbügels, die Haken springen jeweils zur gleichen Seite der Ebene hin vor, und dadurch, daß die Verhakungszungen aus der Ebene ausgebogen sind, wird erreicht, daß sie an ihrem in Schließrichtung des Federstahlbügels vorne liegenden Abschnitt beim Zusammenlauf der beiden Enden des Federstahlbügels jeweils die Platte des anderen Schließgliedes, falls sie auf dieser Seite anläuft, seitlich so weit auslenken, bis sie an die (in Schließrichtung folgende) Aussparung gelangt, in die die Verhakungszunge dann eingreifen kann. Diese bevorzugten Schließglieder haben wegen ihrer besonders flachen und auch kleinen Bauweise den großen Vorteil, daß sie kaum seitlich am Fahrzeugreifen "auftragen" und deswegen auch nicht Gefahr laufen, unerwünscht gegen irgendetwas anlaufen zu können. Da die Aussparungen bevorzugt als ausgestanzte Durchbrüche ausgebildet sind, kann beim Abnehmen der erfindungsgemäßen Gleitschutzkette z.B. Eis, das sich vielleicht in einer Aussparung angesammelt hat, ohne weiteres aus dieser durch das Aushängen des Hakens herausgedrückt werden, so daß auch bei Vereisung das Abnehmen der Glieder der Kette noch möglich ist.

Eine weiter bevorzugte Fortbildung der erfindungsgemäßen Gleitschutzkette besteht darin, daß die Sperreinrichtung eine Kettenführungsnut aufweist, die so ausgebildet ist, daß abwechselnd ein Glied der Spannkette flach seitlich auf dieser Kettenführungsnut aufliegt, während das nachfolgende Kettenglied in seiner Ebene senkrecht zum vorhergehenden versetzt und in der Führungsnut ausgerichtet gehalten wird und mit nur geringem seitlichem Spiel in die Führungsnut eintaucht, wodurch die Lage der Spannkette innerhalb der Sperreinrichtung genau festgelegt wird. Dabei wird das Sperrelement in Form einer auf die Kettenführungsnut hin ausgerichteten, drehverschwenkbaren Sperrklinke vorgesehen, die unter Federvorspannung in Richtung auf ein Eingreifen in die Kettenführungsnut hin vorgespannt und mit einer Formgebung derart versehen ist, daß sie bei Zug an der Spannkette in Spannrichtung den Durchlauf der Kettenglieder in der Kettenführungsnut freigibt, in Gegenrichtung jedoch den Durchlauf der Kettenglieder sperrt.

Bevorzugt wird die Kettenführungsnut in ihrem Verlauf derart gekrümmt, daß das freie Ende der Spannkette etwa zur Mitte des Fahrzeugreifens hin abziehbar ist und der mit dem Halterungsstrang verbundene Teil der Spannkette vom Halterungsstrang her geradlinig in die Kettenführungsnut einläuft. Hierdurch wird erreicht, daß das freie Ende der Spannkette in einer solchen Richtung aus der Sperreinrichtung herausgeführt werden kann, daß die Spannkette beim Ziehen nicht abgekantet wird, sondern sich leichtgängig und bequem bewegen läßt.

Weiter bevorzugt ist die Kettenführungsnut als Umfangsnut einer drehbar gelagerten Rolle ausgebildet, wodurch der Kraftaufwand beim Spannen der Spannkette noch weiter verringert wird und außerdem das freie Ende der Spannkette in einer beliebigen, zu seiner Betätigung jeweils besonders geeigneten Richtung ablaufen kann.

Gemäß einer weiteren, bevorzugten Ausgestaltung der Erfindung ist die Sperrklinke an einem einseitig verschwenkbar gelagerten Kipphebel, bevorzugt einstückig mit diesem, zwischen dessen Enden vorspringend ausgebildet, dessen freies Ende als ein von der Bedienungsperson handhabbarer Betätigungsgriff ausgebildet ist, der seinerseits aus der Sperreinrichtung herausragt, wobei der Kipphebel in Richtung auf die Spannkettenführungsnut hin federvorgespannt ist. Hierdurch kann die Klinke in die Federführungsnut und damit in den offenen Innenbereich solcher Spannkettenglieder hineinragen, die quer zur Federführungsnut an deren beiden seitlichen Rändern aufliegen. Dabei wird der Kipphebel bevorzugt auf einem im Gehäuse der Sperreinrichtung aufgenommenen Zapfen verdrehbar gelagert und vom Ende einer um den Zapfen gewickelten Vorspannfeder gegen die Kettenführungsnut hin belastet. Besonders bevorzugt weist das Gehäuse der Sperreinrichtung einen Endanschlag für die Freigabebewegung des Kipphebels auf. Durch entsprechende Wahl der Länge des freien Endes des Kipphebels kann die Auslösekraft eingestellt werden, die zu einem mühelosen Lösen der Sperreinrichtung erforderlich ist, auch dann, wenn die Sperreinrichtung vereist sein sollte.

Das Gehäuse der Rücklaufsperre kann aus jedem geeigneten Material bestehen. Ganz besonders bevorzugt wird es, ebenso wie das die Kettenführungsnut aufweisende Teil, aus einem geeigneten Kunststoff hergestellt, wodurch auch die bei den auftretenden Bewegungen ausgelösten Reibungskräfte zwischen der Spannkette und der Kettenführungsnut besonders klein gehalten werden können. Insgesamt kann damit die gesamte Sperreinrichtung als ein relativ flaches, kleines Teil ausgeführt werden, das seitlich vom Fahrzeugrad ohne großen Platzbedarf gut unterbringbar ist und gegen die Seitenwand des Reifens anliegen kann, ohne daß dieser durch überstehende Kanten oder dergleichen Gefahr läuft, beschädigt zu werden.

Der geschilderte Aufbau der Rücklaufsperre stellt auch schon für sich gesehen eine bemerkenswert einfache, robuste, bestens wirksame und einfach bedienbare Gesamtvorrichtung dar, was unabhängig davon gilt, ob er in Verbindung mit einer erfindungsgemäßen Gleitschutzkette eingesetzt wird oder nicht. Um das Freikommen des freien Endes der Spannkette aus der Sperreinrichtung zu verhindern, wie dies die Erfindung vorsieht, sind vielerlei Möglichkeiten konstruktiver Ausgestaltungen denkbar. Ganz besonders bevorzugt ist jedoch am Ende der Spannkette ein Endanschlag ausgebildet derart, daß er, wenn die Spannkette bis zu diesem freien Ende zur Sperreinrichtung hingezogen ist, mit einer entsprechenden Gegenausbildung am Gehäuse der Sperreinrichtung in Eingriff bringbar ist und dadurch die gewünschte Blockierung ausgelöst wird, die verhindert, daß dieses Ende der Spannkette in die Sperreinrichtung einlaufen könnte.

Dieser Endanschlag am Ende der Spannkette ist ganz besonders bevorzugt in Form eines Handgriffes ausgebildet, der stets außerhalb der Sperreinrichtung verbleibt und somit jederzeit ohne weiteres vom Benutzer zum Spannen der Spannkette ergriffen werden kann, was sogar möglich ist, wenn der Benutzer dicke Handschuhe anhaben sollte.

In bevorzugter Weiterbildung der Erfindung ist der genannte Endanschlag als ein elastisch dehnbares Spannglied ausgebildet, dessen freies Ende ein wiederum bevorzugt als Haken geformtes Befestigungselement zum Einhaken an der äußeren Seitenhalterung aufweist. Hierdurch wird ein federnd längbares Abspannglied ausgebildet, das beim Spannen der Spannkette in der Hand der spannenden Person selbst noch eine gewisse elastische Dehnung erfährt. Dabei ist es grundsätzlich möglich, das Abspannglied z.B. in Form einer Spiral-Zugfeder auszubilden. Gemäß einer ganz besonders bevorzugten Ausgestaltung der Erfindung wird jedoch dieses elastisch dehnbare Spannglied ebenfalls in Form eines Dämpfungselementes ausgebildet, wodurch am freien Ende der Spannkette auch bei Auftreten dynamischer Belastungen während der Fahrt die Ausbildung von Schwingungen, aufgrund derer der Haken am Ende des Spanngliedes von seiner Einhakstelle freikommen könnte, verhindert wird.

In vorzugsweiser Ausgestaltung der Erfindung wird das Dämpfungselement aus Kunststoff oder vulkanisiertem Kautschuk gebildet, also aus einem viskoelastischen Material, das aufgrund der ihm immanenten Hysterese die angestrebten Dämpfungscharakteristiken zeigt.

Das den Handgriff bildende Abspannglied kann eine starre Fortsetzung des Endes der Spannkette bilden, wird jedoch bevorzugt an diesem Ende schwenkbar befestigt, um das Einhaken des an seinem Ende bevorzugt als Haken ausgebildeten Befestigungselementes in ein Kettenglied der äußeren Seitenhalterung noch weiter zu vereinfachen.

In weiterer vorteilhafter Ausgestaltung der erfindungsgemäßen Gleitschutzkette wird mindestens ein an der äußeren Seitenhalterung angebrachtes, der Mitte des Fahrzeugreifens zugewandtes Umlenkelement zum Umlenken der Spannkette im Bereich hinter der Sperreinrichtung vorgesehen. Über dieses Umlenkelement kann der freie Abschnitt der Spannkette, der durch die Rücklaufsperre beim Spannen hindurchgezogen wird, umgelenkt werden, wodurch ein verhältnismäßig langer Endabschnitt der Spannkette noch zuverlässig untergebracht werden kann. Die Ausrichtung des Umlenkelementes bevorzugt zur Mitte des Fahrzeugreifens hin vermeidet es, daß sich hierbei Kettenabschnitte überkreuzen müßten.

Die an der äußeren Seitenhalterung angebrachten, als Dämpfungselemente ausgebildeten elastischen Dehnglieder können aus jedem geeigneten Werkstoff gefertigt sein. Besonders bevorzugt werden hierfür jedoch dämpfende Kunststoffe mit ausreichenden federnden Eigenschaften oder geeigneter vulkanisierter Kautschuk eingesetzt. Bevorzugt werden solche vulkanisierten Kautschuksorten verwendet, die auch bei niedrigen Temperaturen, bevorzugt bis −50°C, ihre elastischen Dehneigenschaften im wesentlichen beibehalten.

In bevorzugter Ausgestaltung der Erfindung sind die Feder- und Dämpfungsglieder als Dehn- bzw. Bandabschnitte ausgebildet, an deren beiden Enden jeweils ein Befestigungselement angebracht ist, das vorzugsweise als Haken oder Öse zum Anschluß an das benachbarte Kettenglied des anliegenden Halterungsstranges ausgebildet sein kann.

Ein solches bandförmiges Feder- und Dämpfungselement ist nicht nur verhältnismäßig flach, sondern ermöglicht auch ein großes Maß an konstruktiver Freiheit bei seiner Formgebung.

Es ist grundsätzlich möglich, die Befestigungselemente an den Enden des bandförmigen Dehnungselementes in jeder geeigneten Weise festzuspannen oder sonstwie zu befestigen. Eine besonders einfache, dauerhafte und zuverlässige Befestigung besteht allerdings darin, daß die dem Dämpfungselement zugewandten Enden der Befestigungselemente jeweils mit Klebern auf der Basis Kautschuk-Chlorhydrat in die Enden des Zugelementes eingeklebt sind.

Wegen der Dämpfungseigenschaft ist es bei den federnden Dämpfungselementen nicht erforderlich, deren Längung in dem Maß zu begrenzen, wie dies z.B. bei reinen Spiralfedern als zwischengeschalteten Elastizitäten der Fall wäre. Gemäß einer bevorzugten Ausgestaltung der Erfindung ist jedoch auch für die erfindungsgemäß eingesetzten Dämpfungselemente eine Federwegbegrenzung vorgesehen, um ein Überdehnen des Dämpfungselementes auch bei extrem starker Spannung zu verhindern. Dies wird bevorzugt dadurch erreicht, daß das Dämpfungselement in einem geschlossenen Gehäuse aufgenommen ist, durch dessen Wandung seine Befestigungselemente hindurchragen, wobei mindestens eines der Befestigungselemente, bevorzugt aber beide, in Dehnungsrichtung (Ausfederrichtung) beweglich innerhalb der umschließenden Wand gelagert sind. Dieses geschlossene Gehäuse, das bevorzugt aus thermoplastischem Kunststoff besteht, schützt das in ihm aufgenommene Dämpfungselement, ist widerstandsfähig gegen niedere Temperaturen und verhindert (da es das Dämpfungselement vollständig umgibt) aufgrund seiner Stirnwände, daß das Dämpfungselement sich zu weit dehnen könnte. Die Dehnung des Dämpfungselementes kann nach außen durch die an seinen Enden angeschlossenen Befestigungsglieder übertragen werden, da zumindest eines derselben in der das Dämpfungselement umgebenden Wand in Dehnungsrichtung beweglich gelagert ist.

Es ist grundsätzlich möglich, in die Stirnwände des Gehäuses verhältnismäßig große Durchbrüche für die Befestigungselemente des Dämpfungsgliedes einzubringen. Besonders bevorzugt weist jedoch jedes Befestigungselement einen sich in Federrichtung erstreckenden Schaft auf, der eine mit Spielpassung zu ihm bemessene Öffnung im Gehäuse durchsetzt. Dadurch wird erreicht, daß sich der Schaft in der Stirnwand des Gehäuses frei bewegen kann, dennoch das Eindringen von Schmutz und Feuchtigkeit in das Gehäuse weitgehend vermieden und dadurch einer Eisbildung innerhalb des Gehäuses vorgebeugt werden kann. Besonders bevorzugt besteht das Gehäuse seinerseits aus zwei fest miteinander verbundenen Halbschalen, wodurch eine einfache, rasche und billige Montage möglich ist. Die Verbindung der Halbschalen erfolgt bevorzugt über geeignete Rasteinrichtungen, die eine besonders schnelle Befestigung der Halbschalen aneinander ergeben.

Die Erfindung wird nachfolgend anhand der Zeichnung im Prinzip beispielshalber noch näher erläutert. Es zeigen :

Figur 1 eine auf einen Fahrzeugreifen aufgezogene erfindungsgemäße Gleitschutzkette in perspektivischer Darstellung (von der Fahrzeugreifen-Außenseite her gesehen) ;

Figur 2 die Gleitschutzkette aus Figur 1, jedoch von der Radinnenseite her gesehen (wiederum in Perspektive) ;

Figur 3 die beiden Schließglieder des in Figur 2 gezeigten Federstahlbügels in vergrößerter Darstellung und in getrenntem Zustand kurz vor dem gegenseitigen Verriegeln beim Zusammenlaufen der Enden des Federstahlbügels (in perspektivischer Schrägdarstellung) ;

Figur 4 die beiden Schließglieder aus Figur 3 in gegenseitig verriegeltem Zustand (wiederum in perspektivischer Schrägdarstellung) ;

Figur 5 ein Abspannglied am freien Ende der Spannkette (vergrößerte Perspektivdarstellung) ;

Figur 6 eine Rücklaufsperre für die Spannkette bei einer erfindungsgemäßen Gleitschutzkette (vergrößert und perspektivisch dargestellt) ;

Figur 7 die Sperreinrichtung aus Figur 6, wobei jedoch die dem Betrachter zugewandte Gehäuseseitenwand entfernt ist ;

Figur 8 eine schematische Darstellung des Eingriffs des Sperrelementes der Sperreinrichtung der Figuren 6 und 7 in die Spannkette (in vergrößertem Maßstab) ;

Figur 9 einen Schnitt längs Linie IX-IX in Figur 8, sowie

Figur 10 eine stark vergrößerte perspektivische Schrägdarstellung eines elastisch dehnbaren Dämpfungsgliedes (mit teilweise entferntem Gehäusedeckel).

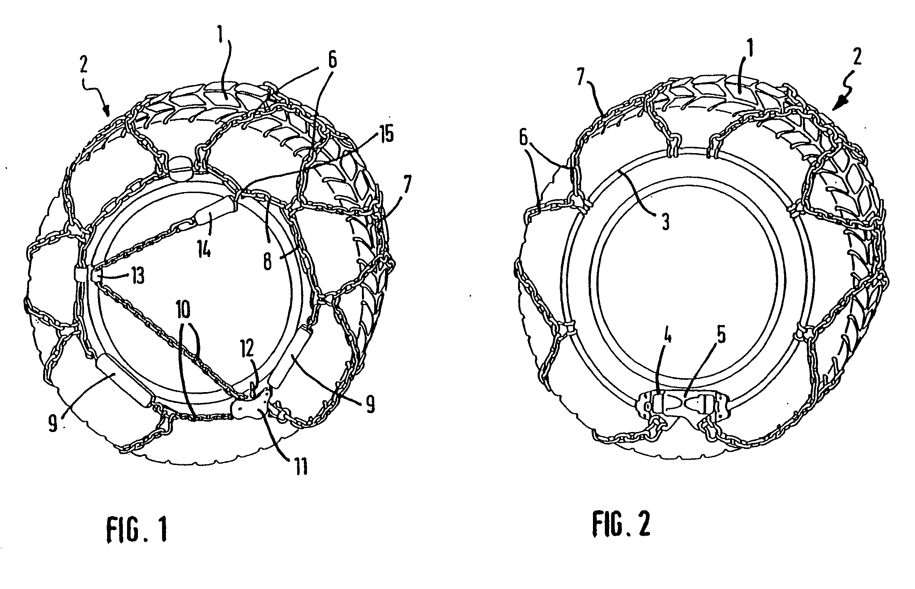

In den Figuren 1 und 2 ist jeweils im Schrägbild ein auf eine Felge aufgezogener Reifen 1 gezeigt, auf dem eine allgemein mit 2 bezeichnete Gleitschutzkette montiert ist. Diese weist auf der Radinnenseite eine innere Halterung in form eines federstahlbügels 3 auf (vgl. Figur 2), der bei dem in Figur 2 gezeigten Endzustand einen geschlossenen Kreisring bildet.

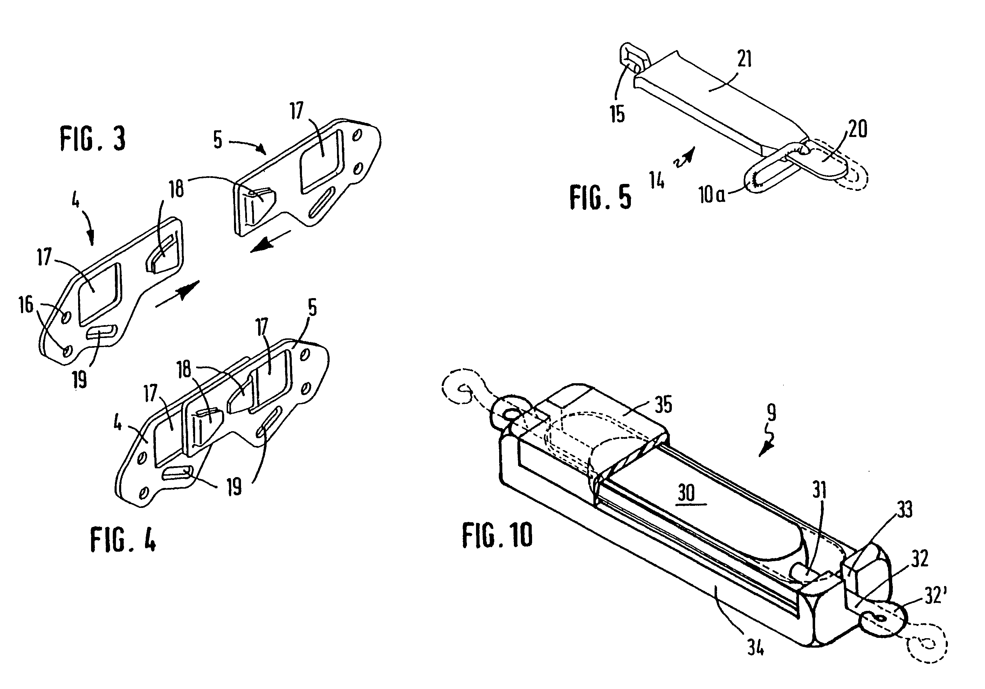

An den Enden des Federstahlbügels 3 sind jeweils Schließglieder 4, 5 befestigt, deren jedes von einem flachen, plattenförmigen Stanzteil gebildet ist (Figuren 2, 3, 4). Die beiden Stanzteile 4, 5 sind spiegelsymmetrisch zueinander ausgebildet und entsprechend montiert. Sie werden weiter unten anhand der Figuren 3 und 4 noch näher erläutert.

Am Federstahlbügel 3 sind die Enden von sich über die Lauffläche des Reifens 1 erstreckenden Kettenstrangabschnitten 6 befestigt, die zusammen mit in der Lauffläche befindlichen Verbindungsabschnitten 7 das Laufnetz der Gleitschutzkette 2 ausbilden.

Zum Montieren wird zunächst der Federstahlbügel 3 vom Benutzer an seinen beiden Enden ergriffen und so weit aufgespreizt, daß er über die Lauffläche des Reifens 1 geführt werden kann. Anschließend wird er freigegeben, wodurch er, falls er ausreichend vorgespannt ist, elastisch in seine Ausgangslage zurückfedert. Dabei bewegen sich seine Enden infolge der elastisch rückstellenden Federkräfte aufeinander zu und es gelangen die Schließglieder 4, 5 in gegenseitigen Eingriff. Hiernach nimmt der Federbügel die in Figur 2 gezeigte Lage ein. Sollte die Federvorspannung nicht ganz ausreichen, um die beiden Enden des Federstahlbügels 3 beim Ausfedern einander soweit zu nähern, daß sich die Schließglieder 4, 5 selbsttätig aneinander verhaken, in diesem Fall muß der Benutzer die beiden Seitenschenkel des Federstahlbügels 3 mit den Händen nur noch um die kleine, fehlende Strecke einander nähern. Zum Abmontieren der Gleitschutzkette kann der Federstahlbügel 3 nach dem Lösen der Verhakung der Schließglieder 4, 5 von den den Reifen 1 außen umgreifenden Händen des Benutzers erfaßt und hinter dem Reifen wieder so weit gespreizt werden, daß er von dorther über den Reifen 1 nach außen geführt werden kann. Hierbei entfernen sich die Schließglieder 4, 5 voneinander, ohne durch die Kettenabschnitte des Laufnetzes 6, 7 behindert zu werden.

Die Kettenstrangabschnitte 6 sind mit ihren einen Enden auf der Reifen-Innenseite am Federstahlbügel 3 befestigt und mit ihren anderen Enden auf der Außenseite des Reifens 1 (Figur 1) an einer geschlossenen äußeren Halterungskette 8 gehalten, an deren beiden Enden jeweils ein Dehnelement 9 befestigt ist, wie es weiter unten anhand der Figur 10 noch näher beschrieben wird.

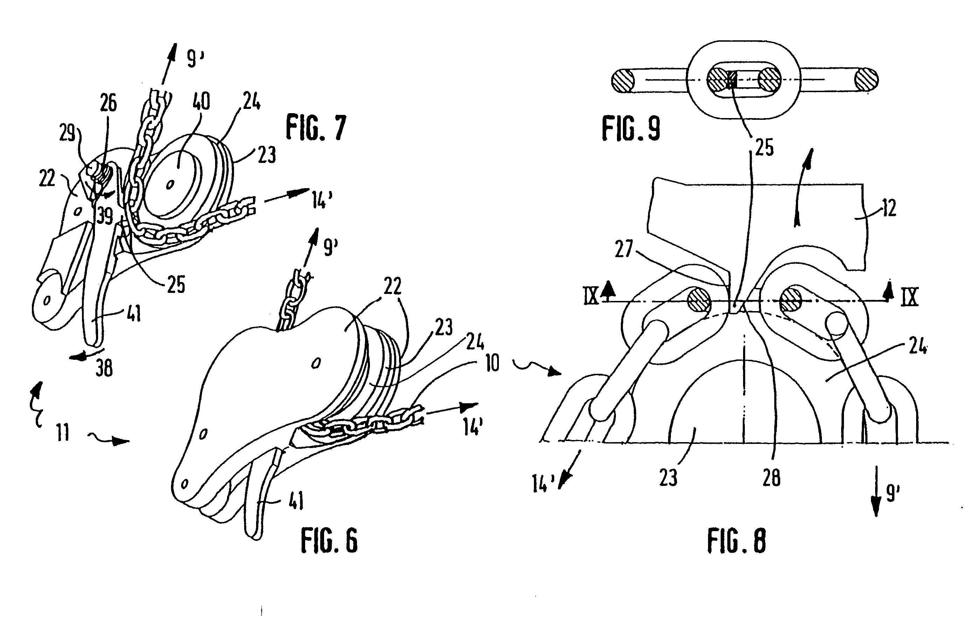

Die nicht an der Halterungskette 8 befestigten anderen Enden dieser Dehnelemente 9 sind ihrerseits am Ende einer Spannkette 10 bzw. an eine Rücklauf-Sperreinrichtung 11 angeschlossen, die weiter unten anhand der Figuren 6 bis 9 noch näher beschrieben wird. Es sei an dieser Stelle nur erwähnt, daß die Sperreinrichtung das mühelose Durchziehen der Spannkette 10 in Spannrichtung gestattet, also in einer Richtung, in der sich der Abstand zwischen beiden Dehngliedern 9 verringert, während ein Durchrutschen der Spannkette 10 in Gegenrichtung so lange blockiert ist, bis ein Auslöser 12 zur Freigabe der Spannkette 10 und damit für eine freie und unbehinderte Hin- und Herbewegung derselben durch die Sperreinrichtung 11 betätigt wird.

Das freie Ende der Spannkette 10 ist über ein in Form eines Umlenkhakens 13 geformtes Umlenkelement geführt, das am äußeren Ketten-Halterungsstrang 8 befestigt ist und zur Reifenmitte hin vorsteht. Von hier aus wird der Endbereich der Spannkette zu einer ungefähr gegenüberliegenden Stelle des Halterungsstrangs 8 gerichtet und dort mit einem Haken 15, der am freien Ende eines federnden Abspanngliedes 14 vorgesehen ist, geeignet eingehakt. Dabei ist das Abspannglied 14 seinerseits am freien Ende der Spannkette 10 schwenkbar angeordnet (und wird in Verbindung mit Figur 5 weiter unten noch genauer dargestellt).

Wie aus Figur 1 ersichtlich, bilden die Halterungskette 8, die beiden Dehnglieder 9, der diese verbindende Abschnitt der Spannkette 10 sowie die Sperreinrichtung 11 einen etwa kreisringförmig umlaufenden, völlig geschlossenen, ununterbrochenen Strang aus, der die äußere Seitenhalterung der Gleitschutzkette 2 darstellt.

Auch wenn nach Betätigung des Auslösers 12 das freie Ende der Spannkette 10 durch die Sperreinrichtung 11 hindurchgezogen wird, kann der geschlossene Strang nicht geöffnet werden, da das Abspannglied 14 gegen die Sperreinrichtung 11 anläuft und infolge seiner Abmessungen nicht durch diese hindurchgezogen werden kann. Dabei ist die Länge der Spannkette 10 so bemessen, daß sich bei voll zurückgezogener Spannkette und bei Anlage des Abspanngliedes 14 gegen die Spanneinrichtung 11 beim Auseinanderbiegen der Enden des Federbügels 3 (Figur 2) ein so großer Abstand zwischen den Schließgliedern 4, 5 einstellt, daß der Federbügel 3 von außen her über den Reifen 1 unbehindert geführt werden kann. Ist dies geschehen, werden, wie bereits erwähnt, die Enden des Federbügels freigegeben, dieser federt in seine Ausgangsstellung zurück und dabei kommen die Schließglieder 4, 5 in gegenseitigen Eingriff.

Hiernach wird das aus der Sperreinrichtung 11 herausragende Abspannglied 14 von der Bedienungsperson ergriffen und durch Zug an ihm die Spannkette in Spannrichtung belastet und so lange durch die Sperreinrichtung 11 hindurchgezogen, bis ein ausreichend großer Widerstand auftritt. In diesem Zustand sind dann die Dehnglieder 9 bereits mehr oder weniger stark gedehnt, die äußere Seitenhalterung nimmt die in Figur 1 gezeigte Lage ein und der Auslöser 12 verhindert einen Rücklauf der Spannkette 10, also eine unerwünschtes Entspannen derselben.

Hiernach muß nur noch das freie Ende der Spannkette 10 über den Umlenkhaken 13 geführt und nach Dehnen des Abspanngliedes 14 der Haken 15 so in die äußere Seitenhalterung 8 eingehängt werden, daß das freie Ende der Spannkette 10 leicht gespannt ist, um ein unbeabsichtigtes Freikommen zu verhindern.

Bei montierter Gleitschutzkette sorgen während der Fahrt die Dehnglieder 9 dafür, daß die Gleitschutzkette 2 stets sicher und stramm auf dem Reifen 1 sitzt und alle auftretenden dynamischen Belastungen, die zu Änderungen in der Lage einzelner Kettenstrangabschnitte führen, gleichmäßig aufgenommen und ausgeglichen werden.

Wie ersichtlich, sind zur Montage der Gleitschutzkette 2 am Reifen 1 nur wenige, einfache, auch bei schlechten Lichtverhältnissen, sogar im Dunkeln, ohne weiteres durchführbare Handgriffe nötig, die kein besonderes Geschick erfordern.

In Figur 3 sind die beiden Schließglieder 4, 5 gezeigt, die zueinander spiegelbildlich-baugleich ausgebildet und an den beiden Enden des Federstahlbügels 3 befestigt sind. Wenn der Federstahlbügel 3 unter Aufbau einer elastischen Rückstellkraft gespreizt wird, werden die Schließglieder 4, 5 in eine voneinander beabstandete Lage gebracht, wie dies in Figur 3 dargestellt ist. Beim anschließenden Zurückfedern des Federstahlbügels 3 in seine Ausgangsposition werden die Schließglieder 4, 5 in der in Figur 3 gezeigten Pfeilrichtung aufeinanderzu bewegt. Jedes Schließglied 4, 5 ist z.B. aus einem 2-mm-Stahlblech ausgestanzt und weist an seinem dem jeweiligen Ende des Federstahlbügels 3 zugewandten Ende zwei Nietlöcher 16 auf, an denen ein das Ende des Federstahlbügels 3 im Klemmsitz umgreifendes Gegenstück (in den Figuren nicht dargestellt) angenietet ist. Jedes Schließglied 4, 5 ist ferner etwa in seiner Mitte mit einer ungefähr rechteckigen Aussparung 17 versehen und weist nahe seinem freien Ende einen Schließhaken 18 auf, der dadurch gebildet wird, daß eine Blechzunge geeignet aus dem Stahlblech der Grundplatte des betreffenden Schließgliedes 4, 5 herausgebogen wurde. Die Stahlzunge 18 steht dabei entgegen der Schließrichtung aus der Grundplatte vor, also in Richtung auf den zugehörigen Federstahlbügel 3 hin, so daß sie einen entgegen der Schließrichtung sperrenden Schließhaken 18 ausbildet, und erstreckt sich nahe dem freien Ende des betreffenden Schließgliedes 4, 5 von dessen Fläche aus schräg nach außen (d.h. nach der Seite des Schließgliedes, die nicht zur Anlage an der Seitenwange des Reifens vorgesehen ist) sowie zur Aussparung 17 hin. Die Zunge ist schräg zur Fläche des Schließgliedes 4, 5 abgewinkelt und läuft anschließend parallel zu dessen Aufspannebene, wobei sie sich zu ihrem freien Ende hin verjüngt. Der Abschnitt zwischen dem Endabschnitt der Lasche 18 und der Fläche des Schließgliedes ist nicht wesentlich größer als dessen Blechdicke. Auch ist die Breite des von der Fläche abstehenden Abschnitts der Zunge 18 nur wenig geringer als die Breite der Aussparung 17. Die Schließhaken 18 beider Schließglieder 4, 5 springen zur gleichen Seite hin von der Grundplatte vor. Die Schließglieder 4, 5 können sich aneinander verhaken, unabhängig davon, welches der beiden Schlußglieder 4, 5 vorne und welches hinten liegt.

In Figur 4 sind die beiden Schließglieder 4, 5 in verhaktem Schließzustand dargestellt, der sich einstellt, wenn der Federstahlbügel wieder in seine ringförmige Ausgangslage (nach vorherigem Ausspreizen) zurückgefedert ist bzw. in eine entsprechende Lage von Hand gebracht wurde.

Die Schließglieder 4, 5 weisen auch an ihrem der Reifenlauffläche zugewandten Rand jeweils einen Durchbruch 19 zur Befestigung eines der über die Reifenlauffläche sich erstreckenden Kettenstrangabschnitte 6 auf.

Die Darstellung nach Figur 5 zeigt in perspektivischer, vergrößerter Schrägansicht ein Abspannglied 14, wie es am Ende der Spannkette vorgesehen ist (vgl. Figur 1). Dieses weist einen bandförmigen Mittelabschnitt 21 auf und besteht aus einem vulkanisierten Kautschuk, der bei einer Temperatur bis herunter zu −50°C noch ausreichend geschmeidig und elastisch bleibt. Dieser Mittelabschnitt 21 wirkt gleichzeitig als Dämpfungsglied, läßt sich von Hand mühelos dehnen und ist so bemessen, daß er direkt als Handgriff von der Betätigungsperson, die die Spannkette 10 zu spannen wünscht, benutzt werden kann.

In das der Spannkette 10 (von der in Figur 5 der besseren Darstellung wegen nur das letzte Glied gezeigt ist) zugewandte Ende des bandförmigen Mittelabschnitts 21 ist eine Endplatte 20 eingelassen, die eine Querbohrung zur Aufnahme des letzten Kettengliedes 10a der Spannkette 10 aufweist. Diese ist somit schwenkbar am Abspannglied 14 angelenkt und ermöglicht dessen Benutzung als Handgriff zum Spannen der Spannkette 10. Am freien Ende des Mittelabschnitts 21 ist auch noch der Haken 15 befestigt, der ein Einhaken in die Seitenkette nach dem Spannen der Spannkette 10 ermöglicht (vgl. Endlage wie in Figur 1 gezeigt).

Die Figuren 6 und 7 zeigen eine Sperreinrichtung (Rücklaufsperre) 11 in schräger Perspektivdarstellung von unten, wobei die Spannkette 10 in ihrem durch die Sperreinrichtung 11 verlaufenden Abschnitt ebenfalls dargestellt ist.

Die Sperreinrichtung 11 weist ein Gehäuse auf, das von zwei mit Abstand zueinander angeordneten Kunststoff-Seitenwangen 22 gebildet wird (Figur 6). In Figur 7 ist die dem Betrachter zugewandte Seitenwange 22 der Sperreinrichtung 11 weggelassen, um die Verhältnisse im Inneren derselben zu illustrieren.

Die beiden Seitenwangen 22 sind, wie Figur 7 zeigt, von einem querverlaufenden Zapfen 40 durchsetzt, der eine zwischen ihnen angeordnete Rolle 23 drehbar trägt. Diese Rolle 23 ist an ihrem Außenumfang mit einer Kettenführungsnut 24 versehen, die in Verbindung mit den Figuren 8 und 9 in ihrer Wirkungsweise und im Zusammenwirken mit den Gliedern der Spannkette 10 noch näher geschildert wird.

Über diese Rolle 23 und durch die Kettenführungsnut 24 läuft die Spannkette 10. In Richtung des Pfeiles 9' (Figuren 6 und 7) führt die Spannkette zum Dehnelement 9, über das sie am äußeren Halterungsstrang 8 angeschlossen ist, und in Richtung des Pfeiles 14' führt sie zum Abspannglied 14 sowie zu ihrem freien Ende, an dem die Bedienungsperson zum Spannen angreift.

An einem weiteren, die Seitenwangen 22 quer durchsetzenden Zapfen 29 ist der Auslöser 12 in Form eines Betätigungshebels mit seinem einen Ende kippverschwenkbar gelagert und als einstückiger Blechhebel ausgebildet, der mittels eines Hebels 26 in der in Figur 7 gezeigten Pfeilrichtung 39 belastet ist. Die Feder 26 ist dabei um den Zapfen 29 gewickelt.

Das andere, freie Ende 41 des Auslösers 12 ist in einer für dessen Betätigung besonders geeigneten Form, etwa wie ein Schußwaffenabzug, ausgebildet, um eine Betätigung in Pfeilrichtung 38 bequem zu ermöglichen, und ragt aus dem von den Seitenwangen 22 gebildeten Gehäuse nach außen bzw. in Richtung zur Reifenmitte hin, wie dies aus Figur 1 ersichtlich ist. Denn in dieser Ausrichtung ist eine besonders einfache Betätigung des Auslösers 12 möglich, ohne die Gefahr, daß er sich versehentlich löst.

In einer Entfernung vom Mittelpunkt des Zapfens 29, die etwa einem Drittel der Gesamtlänge des Auslösers 12 entspricht, ist eine Sperrklinke 25 ausgebildet (Figur 7), die gegen die Rolle 23 durch die Kraft der Feder 26 vorgespannt ist. Diese Klinke 25 weist eine erste Fläche 27 auf (Figur 8), die dem mit dem Pfeil 14 bezeichneten Ende der Spannkette 10 zugewendet ist und bei Anlage gegen die Rolle 23 etwa radial zu dieser verläuft. Die ihr gegenüberliegende andere Endfläche der Klinke 25 ist zum Zapfen 29 hin geeignet abgeschrägt.

Die Wirkungsweise des Gesperres ist in Figur 8 noch genauer dargestellt. Dort ist gezeigt, daß jedes zweite Glied der Spannkette 10 in die Kettenführungsnut 24 eintaucht und somit etwa in einer Radialebene der Rolle 23 liegt, während die anderen Kettenglieder der Spannkette 10 auf dem Außenumfang der Rolle 23 aufliegen, und zwar jeweils mit ihren beidseits der Kettenführungsnut 24 sich erstreckenden Bereichen. Die unterschiedlich zur Rolle 23 angestellten Flächen 27, 28 der Klinke 25 ermöglichen, wie aus Figur 8 ersichtlich, die Bewegung der Spannkette 10 in Richtung des Pfeiles 14' (zum freien Ende der Spannkette hin), wobei der Auslöser 12 mit der Klinke 25 durch das Auflaufen eines sich radial zur Rolle 23 erstreckenden Kettengliedes gegen die Schrägfläche 28 in Richtung des gekrümmten Pfeiles (Figur 8) aus dem Weg geschwenkt wird.

Die Bewegung der Spannkette 10 in Richtung des Pfeiles 9' (also zum Dehnelement 9 hin) ist dagegen durch die Sperrwirkung der Fläche 27 (verbunden mit einer Blockierung des Auslösers 12 gegen eine weitere öffnende Bewegung) verhindert. Die Anordnung ist jedoch, wie ersichtlich, so bemessen, daß eine nur verhältnismäßig geringe Kraft auf den Auslöser 12 aufgebracht werden muß, um die Klinke 25 außer Eingriff mit der Spannkette 10 zu schwenken, so daß selbst dann, wenn die Spannkette 10 unter erheblicher Zugkraft steht, das Auslösen bequem und mühelos vorgenom men werden kann.

Figur 9 zeigt den Schnitt IX-IX in Figur 8, der die etwa rechtwinklig zueinander versetzte Anordnung der Hauptebenen der aufeinanderfolgenden Kettenglieder der Spannkette 10 bei deren Durchlauf durch die Bandführungsnut 24 zeigt.

Figur 10 illustriert eine stark vergrößerte Darstellung eines Dehngliedes 9, das einen länglichen, aus einem Untergehäuse 34 und einem Obergehäuse 35 gebildeten hohlen Kasten aus thermoplastischem Kunststoff aufweist, dessen beide Schmalseiten jeweils mit einem Durchbruch 33 für das Durchstecken eines Befestigungselementes 32 versehen sind.

Im Inneren des Gehäuses 34, 35 ist ein flacher Abschnitt 30 aus vulkanisiertem Kautschuk aufgenommen, der so beschaffen ist, daß er seine Nachgiebigkeit und Elastizität auch noch bei niedrigen Temperaturen bis herunter auf −50°C beibehält.

Dieser mittlere, flache Bandabschnitt 30 ist lose und ohne großes seitliches Spiel in das Gehäuse 34, 35 eingelegt, weist aber zu dessen Schmalseiten in seinem Inneren (von den Bandenden aus gesehen) jeweils einen gewissen Dehnungsabstand auf. Die Summe der an beiden Enden vorliegenden Dehnungsabstände entspricht dem zulässigen Federweg des gesamten, aus dem Gehäuse 34, 35, dem flachen Abschnitt 30 und den an diesem angebrachten Befestigungselementen 32 bestehenden Dehnelementes 9, um den der Bandabschnitt 30 unter Last maximal ausgedehnt werden kann. Hierbei bleibt das Gehäuse 34, 35 ortsfest, da es nicht von der Bewegung des Abschnitts 30 mitgenommen wird. An beiden Enden des Bandabschnitts 30 ist jeweils der sich in Richtung des Federweges durch den jeweiligen Durchbruch 33 erstreckende Schaft 31 eingeklebt oder einvulkanisiert, wobei er mit nur sehr geringem Spiel den jeweiligen Durchbruch 33 durchsetzt, so daß er sich in diesem in Schaftlängsrichtung frei und ungehindert bewegen kann, dabei aber so gut wie kein nennenswertes zeitliches Spiel vorliegt.

Der aus vulkanisiertem Kautschuk gebildete Bandabschnitt 30 wirkt dabei nicht nur als ein elastisches, sondern gleichzeitig auch als ein dämpfendes Element infolge der seinem Werkstoff immanenten, relativ großen Hysterese.

An den freien Enden der Schäfte 31 ist jeweils eine Öse 32' ausgebildet, die an einem Ende der äußeren Halterungskette 8, einem Ende der Spannkette 4 oder der Sperreinrichtung 11 befestigt ist.

Die Gehäuseteile 34 und 35 sind fest miteinander verbunden, so daß das Gesamtgehäuse spritzwasserdicht ist und das in ihm angeordnete elastische Dämpfungselement 30 gut gegen äußere Einflüsse schützt.

In Figur 10 sind die Abmessungen des Dehngliedes 9 in unbelastetem Zustand durch ausgezogene Linien, die Abmessungen bei voller Belastung (d.h. bei maximaler Dehnung) durch gestrichelte Linien dargestellt.

Der in Fig. 1 dargestellte Kettenaufbau, bei dem neben den Dämpfungsgliedern 9 in der äußeren Halterungskette 8 auch noch ein zusätzliches dämpfendes Dehnelement in Form des Abspanngliedes 14 im Bereich hinter der Sperreinrichtung 11 an der Spannkette 10 vorgesehen ist, stellt eine ganz besonders günstige Ausgestaltung der erfindungsgemäßen Gleitschutzkette dar, bei der in vorzüglicher Weise auftretende Schwingungen und die durch diese ausgelösten Geräusche gedämpft sowie ein straffer Kettensitz, auch an der Spannkette im der Sperreinrichtung nachgeschalteten Bereich, erzielt werden können. Die Wirkung der vor und hinter der Sperreinrichtung 11 vorhandenen dämpfenden Dehnelemente 9 und 14 ergänzt sich dabei besonders vorteilhaft, was zu einem überraschend ruhigen Laufgeräusch bei vorzüglichem Sitz der Kette führt. Die bemerkenswerte Ruhe des Laufgeräusches ist auch gegenüber dem Fall einer Verwendung rein elastischer Dehnglieder (etwa in Form von Schraubenfedern) gegeben und überraschend, da hier in unerwarteter Weise durch die zusätzliche Dämpfung auftretender Schwingungen offensichtlich eine Mehrzahl von geräuscherzeugenden Faktoren merklich beeinflußt wird.

**Patentansprüche**

1. Gleischutzkette für Fahrzeugreifen, mit einer inneren und einer äußeren Seitenhalterung (3, 8), die mittels über die Lauffläche des Fahrzeugreifens anlegbarer Kettenstrangabschnitte (6) miteinander verbunden sind, wobei die äußere Seitenhalterung (8) einen Halterungsstrang aufweist, der mit mindestens einem zwischengeschalteten elastischen Dehnglied (9) versehen, an seinem einen Ende an eine Spannkette (10) angeschlossen und an seinem anderen Ende mit einer Sperreinrichtung (11) für die Spannkette versehen ist, die bei Durchlauf der Spannkette diese entgegen der Spannrichtung mittels eines lösbaren Sperrelements (12) verriegelt, **dadurch gekennzeichnet**, daß die innere Seitenhalterung als ein zum Überstreifen über die Reifenlauffläche elastisch aufspreizbarer, ringförmig offener Federstahlbügel (3) ausgebildet ist, der an seinen Enden mit beim Zusammenführen dieser Enden aneinander verriegelbaren Schließgliedern (4, 5) versehen ist, der Halterungsstrang (8) der äußeren Seitenhalterung als ein durchgehender, ununterbrochener Strang und das mindestens eine elastische Dehnglied als Dämpfungselement (30) ausgebildet ist, und die durch die Sperreinrichtung (11) hindurchgeführte Spannkette (10) mit einer Einrichtung (14) versehen ist, die ein Durchlaufen ihres freien Endes durch die Spanneinrichtung (11) verhindert.

2. Gleitschutzkette nach Anspruch 1, dadurch gekennzeichnet, daß jedes Schließglied (4 ; 5) als flache, sich etwa in der Ebene des Federstahlbügels (3) erstreckende Platte ausgebildet ist, die eine aus ihrer Ebene ausgebogene Verhakungszunge (18) aufweist, welche entgegen der Schließrichtung des Federstahlbügels (3) gerichtet ist und der benachbart eine Aussparung (17) in der Platte vorgesehen ist, die in Eingriff mit der Verhakungszunge (18) des jeweils anderen Schließgliedes (5 ; 4) beim Zusammenfedern des Federstahlbügels (3) bringbar ist, und daß die Verhakungszungen (18) jeweils zur gleichen Seite des Federstahlbügels (3) hin vorspringen und in Richtung des Zusammenfederns des Federstahlbügels (3) auf der jeweiligen Platte vor den Aussparungen (17) angeordnet sind.

3. Gleitschutzkette nach Anspruch 2, dadurch gekennzeichnet, daß die beiden Schließglieder (4, 5) spiegelsymmetrisch zueinander ausgebildet sind.

4. Gleitschutzkette nach einem der Ansprüche 1 bis 3, dadurch gekennzeichnet, daß die Sperreinrichtung (11) eine Kettenführungsnut (24) aufweist, wobei die Glieder der Spannkette (10) abwechselnd auf den beiden seitlichen Rändern der Kettenführungsnut (24) aufliegen bzw. senkrecht hierzu in der Kettenführungsnut (24) laufen, und daß das Sperrelement eine auf die Kettenführungsnut (24) hin ausgerichtete, drehverschwenkbare Sperrklinke (25) aufweist, die unter Federvorspannung in Richtung auf ein Eingreifen in die Kettenführungsnut (24) hin vorgespannt ist und derart geformt ist, daß sie bei Zug an der Spannkette (10) in Spannrichtung den Durchlauf der Kettenglieder in der Kettenführungsnut (24) freigibt, in Gegenrichtung jedoch den Durchlauf der Kettenglieder sperrt.

5. Gleitschutzkette nach Anspruch 4, dadurch gekennzeichnet, daß die Kettenführungsnut (24) derart gekrümmt ist, daß das freie Ende der Spannkette (10) bei montierter Kette etwa zur Mitte des Fahrzeugreifens (1) hin abläuft und der mit dem Halterungsstrang (8) verbundene Teil der Spannkette (10) vom Halterungsstrang (8) her geradlinig in die Kettenführungsnut (24) einläuft.

6. Gleitschutzkette nach Anspruch 5, dadurch gekennzeichnet, daß die Kettenführungsnut (24) am Außenumfang einer drehbar gelagerten Rolle (23) ausgebildet ist.

7. Gleitschutzkette nach einem der Ansprüche 4 bis 6, dadurch gekennzeichnet, daß die Sperrklinke (25) an einem einseitig gelagerten, verschwenkbaren Kipphebel (12) zwischen dessen Enden vorspringend ausgebildet ist, dessen freies Ende als Betätigungsgriff (41) ausgebildet ist, der aus der Sperreinrichtung (11) herausragt, wobei der Kipphebel (12) in Richtung auf die Kettenführungsnut (24) hin federvorgespannt ist.

8. Gleitschutzkette nach Anspruch 7, dadurch gekennzeichnet, daß der Kipphebel (12) auf einem im Gehäuse der Sperreinrichtung (11) aufgenommenen Zapfen (29) verdrehbar gelagert und vom Ende einer um den Zapfen (29) gewickelten Vorspannfeder (26) gegen die Kettenführungsnut (24) hin vorgespannt ist.

9. Gleitschutzkette nach Anspruch 8, dadurch gekennzeichnet, daß das Gehäuse der Sperreinrichtung (11) einen Endanschlag für den Kipphebel (12) aufweist.

10. Gleitschutzkette nach einem der Ansprüche 7 bis 9, dadurch gekennzeichnet, daß das Gehäuse der Sperreinrichtung (11) und/oder das die Kettenführungsnut (24) aufweisende Teil (23) aus Kunststoff, bevorzugt thermoplastischem Kunststoff, besteht.

11. Gleitschutzkette nach einem der Ansprüche 1 bis 10, dadurch gekennzeichnet, daß am freien Ende der Spannkette (10) ein Endanschlag ausgebildet ist, der mit einer Gegenausbildung an der Sperreinrichtung (11) in Eingriff bringbar und vorzugsweise als Handgriff ausgebildet ist.

12. Gleitschutzkette nach Anspruch 10 oder 11, dadurch gekennzeichnet, daß der Endanschlag als elastisch dehnbares Spannglied (14) ausgebildet ist, dessen freies Ende ein Befestigungselement zum Einhaken an der äußeren Seitenhalterung (8) aufweist.

13. Gleitschutzkette nach Anspruch 12, dadurch gekennzeichnet, daß das Spannglied (14) als Dämpfungselement ausgebildet ist.

14. Gleitschutzkette nach Anspruch 13, dadurch gekennzeichnet, daß das Spannglied (14) ein elastisches Dehnglied (21) aus Kunststoff oder vulkanisiertem Kautschuk aufweist, dessen freies Ende das Befestigungselement (15) trägt.

15. Gleitschutzkette nach Anspruch 12 oder 13, dadurch gekennzeichnet, daß das Spannglied (14) schwenkbar am freien Ende der Spannkette (10) angebracht ist.

16. Gleitschutzkette nach einem der Ansprüche 1 bis 15, gekennzeichnet durch mindestens ein an der äußeren Seitenhalterung (8) angebrachtes, bei montierter Gleitschutzkette der Mitte des Fahrzeugreifens (1) zugewandtes Umlenkelement (13) zum Umlenken der Spannkette (10) im Bereich hinter der Sperreinrichtung (11).

17. Gleitschutzkette nach einem der Ansprüche 1 bis 16, dadurch gekennzeichnet, daß jedes als Dämpfungselement (30) ausgeführte elastische Dehnglied aus elastisch dehnbarem Kunststoff oder vulkanisiertem Kautschuk besteht und einen Dehnabschnitt (30) aufweist, an dessen beiden Enden jeweils ein Befestigungselement (32) angebracht ist.

18. Gleitschutzkette nach Anspruch 14 oder 17, dadurch gekennzeichnet, daß für das Dämpfungselement (30) ein vulkanisierter Kautschuk eingesetzt wird, der auch bei niedrigen Temperaturen, bevorzugt bis zu −50°C, seine elastischen Dehneigenschaften im wesentlichen beibehält.

19. Gleitschutzkette nach Anspruch 17 oder 18, dadurch gekennzeichnet, daß die Befestigungselemente (32) in die Enden des Dämpfungselements (30) eingesteckt und dort mittels eines Klebers auf der Basis von Kautschuk-Chlor-Hydrat verklebt sind.

20. Gleitschutzkette nach einem der Ansprüche 1 bis 19, dadurch gekennzeichnet, daß für das mindestens eine als Dämpfungselement (30) ausgeführte elastische Dehnglied eine Federwegbegrenzung (34, 35) vorgesehen ist.

21. Gleitschutzkette nach Anspruch 20, dadurch gekennzeichnet, daß jedes Dämpfungselement (30) in einem geschlossenen Gehäuse (34, 35) aufgenommen ist, durch dessen Wandung die Befestigungselemente (32) hindurchragen, wobei mindestens eines der Befestigungselemente (32), bevorzugt jedoch beide, in Federrichtung verschiebbar in der Wandung gelagert ist/sind.

22. Gleitschutzkette nach Anspruch 21, dadurch gekennzeichnet, daß das Gehäuse des Dämpfungselementes (30) aus zwei fest miteinander verbundenen Halbschalen (34, 35) besteht, die bevorzugt aus Kunststoff gebildet sind, und daß die Befestigungselemente (32) jeweils einen sich in Ausfederrichtung erstreckenden Schaft (31) aufweisen, der jeweils eine mit Spielpassung zu ihm bemessene, in die Halbschalen (34, 35) eingebrachte Öffnung (33) durchsetzt.

**Claims**

1. Anti-skid chain for vehicle tyres with an inner and an outer side mounting (3, 8) which are connected together by means of chain strand segments (6) which may be installed over the running surface of the vehicle tyre, whereby the outer side mounting support (8) has a support strand which is provided with at least one interposed elastic expansion element (9), is connected at one end to a tension chain (10) and is provided at its other end with a locking device (11) for the tension chain which, when the tension chain runs through it, locks it against the tensional direction by means of a releasable locking element (12), characterised in that the inner side mounting is constructed as an annularly open spring steel hoop (3) which is elastically expandable for slipping over the running surface of the tyre and which is provided at its ends with closure elements (4, 5) which interlock when these ends are brought together,
the support strand (8) of the outer side mounting is constructed as a continuous, uninterrupted strand and the at least one elastic expansion element is constructed as a damping element (30),
and the tension chain (10) passed through the locking device (11) is provided with a device (14) which prevents its free end running through the clamping device (11).

2. Anti-skid chain as claimed in claim 1, characterised in that each closure element (4 ; 5) is constructed as a flat plate extending approximately in the plane of the spring steel hoop (3) which has a hooking tongue (18) bent out of its plane which is directed against the closing direction of the spring steel hoop (3) and adjacent to which an opening (17) is provided in the plate which is movable into engagement with the hooking tongue (18) of the respective other closure element (5 ; 4) when compressing the spring steel hoop (3), and that the hooking tongues (18) each project towards the same side of the spring steel hoop (3) and are disposed on the respective plate in front of the openings (17) in the direction of the compression of the spring steel hoop (3).

3. Anti-skid chain as claimed in claim 2, characterised in that the two closure elements (4, 5) are constructed mirror symmetrically to one another.

4. Anti-skid chain as claimed in one of claims 1 to 3, characterised in that the locking device (11) has a chain guide groove (24), the links of the tension chain (10) alternately resting on the two side edges of the chain guide groove (24) and extending perpendicular hereto in the chain guide groove (24) and that the locking element has a pivotable locking latch (25) which is directed towards the chain guide groove (24) and which is biased under a spring force in the direction in which it engages in the chain guide groove (24) and is so shaped that it permits the chain links to run through in the chain guide groove (24) when tension acts on the tension chain (10) in the tension direction but locks the chain links from running through in the opposite direction.

5. Anti-skid chain as claimed in claim 4, characterised in that the chain guide groove (24) is so curved that the free end of the tension chain (10) extends away approximately towards the centre of the vehicle tyre (1) when the chain is installed and the portion of the tension chain (10) connected to the mounting strand (8) extends from the support strand (8) in a straight line into the chain guide groove (24).

6. Anti-skid chain as claimed in claim 5, characterised in that the chain guide groove (24) is constructed on the outer periphery of a rotatably mounted roller (23).

7. Anti-skid chain as claimed in one of claims 4 to 6, characterised in that the locking latch (25) is constructed to project from a pivotable rocking lever (12), which is mounted on one side, between its ends, the free end of which lever is constructed as an actuating handle (41) which projects out of the locking device (11), whereby the rocking lever (12) is spring biased in the direction towards the chain guide groove (24).

8. Anti-skid chain as claimed in claim 7, characterised in that the rocking lever (12) is rotatably mounted on a peg (29) accommodated within the housing of the locking device (11) and is biased towards the chain guide groove (24) by the end of a biasing spring (26) wound around the peg (29).

9. Anti-skid chain as claimed in claim 8, characterised in that the housing of the locking device (11) has an end stop for the rocking lever (12).

10. Anti-skid chain as claimed in one of claims 7 to 9, characterised in that the housing of the locking device (11) and/or the component (23) affording the chain guide groove (24) comprises plastics material, preferably thermoplastic plastics material.

11. Anti-skid chain as claimed in one of claims 1 to 10, characterised in that constructed at the free end of the tension chain (10) is an end stop which is movable into engagement with a complementary construction on the locking device (11) and is preferably constructed as a handle.

12. Anti-skid chain as claimed in claim 10 or 11, characterised in that the end stop is constructed as an elastically extensible tension element (14) whose free end has a fastening element for hooking to the outer side mounting (8).

13. Anti-skid chain as claimed in claim 12, characterised in that the tension element (14) is constructed as a damping element.

14. Anti-skid chain as claimed in claim 13, characterised in that the tension element (14) has an elastic expansion element (21) of plastics material or vulcanised rubber whose free end carries the fastening element (15).

15. Anti-skid chain as claimed in claim 12 or 13, characterised in that the tension element (14) is pivotally mounted at the free end of the tension chain (10).

16. Anti-skid chain as claimed in one of claims 1 to 15, characterised by at least one guide element (13), which is mounted on the outer side mounting (8) and is directed towards the centre of the vehicle tyre (1) when the anti-skid chain is installed, for deflecting the tension chain (10) in the region behind the locking device (11).

17. Anti-skid chain as claimed in one of claims 1 to 16, characterised in that each elastic expansion element constructed as a damping element (30) comprises elastically expansible plastics material or vulcanised rubber and has an expansion section (30), secured to whose two ends is a respective fastening element (32).

18. Anti-skid chain as claimed in claim 14 or 17, characterised in that a vulcanised rubber is used for the damping element (30) which substantially maintains its elastic expansion properties even at low temperatures, preferably down to −50°C.

19. Anti-skid chain as claimed in claim 17 or 18, characterised in that the fastening elements (32) are inserted into the ends of the damping element (30) and are there glued in position by means of an adhesive based on rubber-chlorhydrate.

20. Anti-skid chain as claimed in one of claims 1 to 19, characterised in that a spring path limitation (34, 35) is provided for the at least one elastic expansion element constructed as a damping element (30).

21. Anti-skid chain as claimed in claim 20, characterised in that each damping element (30) is accommodated in a closed housing (34, 35) through whose wall the fastening elements (32) project, whereby at least one of the fastening elements (32), but preferably both of them, is/are mounted in the wall so as to be slidable in the spring direction.

22. Anti-skid chain as claimed in claim 21, characterised in that the housing of the damping element (30) comprises two half shells (34, 35) which are rigidly connected together and which are preferably formed of plastics material and that the fastening elements (32) each have a shaft (31) extending in the spring extension direction which passes through a respective opening (33) which is provided in the half shells (34, 35) and is sized to fit it with a clearance.

## Revendications

1. Chaîne anti-dérapante pour pneumatique de véhicule, comprenant des attaches latérales intérieure et extérieure (3, 8) qui sont reliées l'une à l'autre par des segments de tronçon de chaîne (6) se posant sur la surface de roulement du pneumatique, l'attache latérale extérieure (8) comprenant un tronçon de fixation équipé d'au moins un organe extensible élastique interposé (9) et dont une extrémité est raccordée à une chaîne tendeuse (10) et l'autre extrémité est équipée d'un dispositif de blocage (11) de la chaîne tendeuse qui verrouille celle-ci lors de son passage au moyen d'un élément d'arrêt libérable (12) en l'empêchant de se déplacer dans le sens inverse à celui de la traction, caractérisée en ce que l'attache latérale intérieure est conformée en ressort d'acier annulaire ouvert en étrier (3) pouvant être écarté élastiquement pour permettre de le faire passer par-dessus la surface de roulement du pneumatique, les extrémités de ce ressort étant équipées d'organes de fermeture (4, 5) se verrouillant l'un sur l'autre lors du rapprochement de ces extrémités,
le tronçon de fixation (8) de l'attache latérale extérieure est conformé en tronçon continu, ininterrompu et comprenant au moins un organe extensible élastique constituant un élément d'amortissement (30),
et la chaîne tendeuse (10) passant dans le dispositif de blocage (11) est équipée d'un appareillage (14) qui interdit le passage de son extrémité libre dans le dispositif de blocage (11).

2. Chaîne anti-dérapante selon la revendication 1, caractérisée en ce que chaque organe de fermeture (4 ; 5) est conformé en plaque plane orientée approximativement dans le plan du ressort d'acier en étrier (3) et comportant une patte d'accrochage (18) formée par repoussage vers l'extérieur de son plan, orientée dans le sens inverse à celui de la fermeture du ressort d'acier en étrier (3) et à côté de laquelle est prévu dans la plaque un évidement (17) qui peut être amené à s'engager dans la patte d'accrochage (18) de l'autre organe de fermeture (5 ; 4) lors du resserrement élastique du ressort d'acier en étrier (3), et en ce que chacune des pattes d'accrochage (18), qui forme une saillie sur le même côté du ressort d'acier en étrier (3), est disposée sur la plaque correspondante devant l'évidement (17) dans le sens du resserrement élastique du ressort d'acier en étrier (3).

3. Chaîne anti-dérapante selon la revendication 2, caractérisée en ce que les deux organes de fermeture (4, 5) sont symétriquement inverses.

4. Chaîne anti-dérapante selon l'une des revendications 1 à 3, caractérisée en ce que le dispositif de blocage (11) comporte une gorge (24) de guidage de la chaîne, les maillons de la chaîne tendeuse (10) reposant en alternance sur les deux bords latéraux de la gorge de guidage (24) et passant respectivement perpendiculairement aux précédents dans la gorge de guidage (24), et en ce que l'élément de blocage comporte un cliquet d'arrêt oscillant (25) dirigé vers la gorge (24) de guidage de la chaîne et subissant la force d'un ressort sous précontrainte dans le sens le faisant pénétrer dans la gorge (24) de guidage de la chaîne, ce cliquet étant conformé de manière que, lorsqu'une traction est exercée sur la chaîne tendeuse (10), il libère le passage des maillons de la chaîne dans la gorge de guidage correspondante (24) dans le sens de la traction, mais bloque le passage des maillons de la chaîne dans le sens inverse.

5. Chaîne anti-dérapante selon la revendication 4, caractérisée en ce que la gorge (24) de guidage de la chaîne est courbée de manière que l'extrémité libre de la chaîne tendeuse (10) se dirige après montage approximativement vers le centre du pneumatique (1) du véhicule et que la partie de la chaîne tendeuse (10) reliée au tronçon de fixation (8) pénètre à partir de ce tronçon de fixation (8) en ligne droite dans la gorge (24) de guidage de la chaîne.

6. Chaîne anti-dérapante selon la revendication 5, caractérisée en ce que la gorge (24) de guidage de la chaîne est réalisée sur la circonférence extérieure d'un galet monté rotatif (23).

7. Chaîne anti-dérapante selon l'une des revendications 4 à 6, caractérisée en ce que le cliquet d'arrêt (25) est réalisé sur un levier oscillant basculable (12) monté d'un côté, ce cliquet étant saillant entre les extrémités de ce levier dont l'extrémité libre est conformée en poignée d'actionnement (41) qui ressort du dispositif de blocage (11), le levier oscillant (12) étant soumis à la force d'un ressort sous précontrainte orientée vers la gorge (24) de guidage de la chaîne.

8. Chaîne anti-dérapante selon la revendication 7, caractérisée en ce que le levier oscillant (12) est monté rotatif sur un tourillon (29) logé dans la cage du dispositif de blocage (11) et est soumis à la précontrainte, orientée vers la gorge (24) de guidage de la chaîne, de l'extrémité d'un ressort sous précontrainte (26) enroulé autour du tourillon (29).

9. Chaîne anti-dérapante selon la revendication 8, caractérisée en ce que la cage du dispositif de blocage (11) comporte une butée de fin de course destinée au levier oscillant (12).

10. Chaîne anti-dérapante selon l'une des revendications 7 à 9, caractérisée en ce que la cage du dispositif de blocage (11) et/ou l'élément (23) comportant la gorge (24) de guidage de la chaîne est en matière synthétique, de préférence en matière thermoplastique.

11. Chaîne anti-dérapante selon l'une des revendications 1 à 10, caractérisée en ce qu'une butée de fin de course réalisée à l'extrémité libre de la chaîne tendeuse (10) peut être mise en application contre une partie de forme complémentaire du dispositif de blocage (11) et de préférence est conformée en poignée.

12. Chaîne anti-dérapante selon la revendication 10 ou 11, caractérisée en ce que la butée de fin de course est conformée en organe d'ancrage (14) extensible élastiquement et dont l'extrémité libre comporte un élément de fixation destiné à s'accrocher sur l'attache latérale extérieure (8).

13. Chaîne anti-dérapante selon la revendication 12, caractérisée en ce que l'organe d'ancrage (14) est conformé en élément amortisseur.

14. Chaîne anti-dérapante selon la revendication 13, caractérisée en ce que l'organe d'ancrage (14) comprend un organe extensible élastique (21) en matière synthétique ou en caoutchouc vulcanisé, dont l'extrémité libre supporte l'élément de fixation (15).

15. Chaîne anti-dérapante selon la revendication 12 ou 13, caractérisée en ce que l'organe d'ancrage (14) est monté pivotant à l'extrémité libre de la chaîne tendeuse (10).

16. Chaîne anti-dérapante selon l'une des revendications 1 à 15, caractérisée par au moins un élément de renvoi (13) destiné à dévier la chaîne tendeuse (10) dans la région située derrière le dispositif de blocage (11), cet élément étant monté sur l'attache latérale extérieure (8) et étant tourné vers le centre du pneumatique (1) du véhicule lorsque la chaîne anti-dérapante est montée.

17. Chaîne anti-dérapante selon l'une des revendications 1 à 16, caractérisée en ce que chaque organe extensible élastique conformé en élément amortisseur (30) est en matière synthétique ou en caoutchouc vulcanisé extensible élastiquement et comprend une pièce extensible (30) à chacune des deux extrémités de laquelle est rapporté un élément de fixation (32).

18. Chaîne anti-dérapante selon la revendication 14 ou 17 caractérisée en ce que le caoutchouc vulcanisé utilisé pour l'élément amortisseur (30) conserve essentiellement ses caractéristiques d'extensibilité élastique même aux basses températures, de préférence jusqu'à –50°C.

19. Chaîne anti-dérapante selon la revendication 17 ou 18, caractérisée en ce que les éléments de fixation (32) sont encastrés dans les extrémités de l'élément amortisseur (30) et y sont collés au moyen d'un adhésif à base de chlorhydrate de caoutchouc.

20. Chaîne anti-dérapante selon l'une des revendications 1 à 19, caractérisée en ce qu'une butée de fin de course d'élasticité (34, 35) est prévue pour ledit au moins un organe extensible élastique constitué en élément amortisseur (30).

21. Chaîne anti-dérapante selon la revendication 20, caractérisée en ce que chaque élément amortisseur (30) est logé dans un boîtier fermé (34, 35) à travers la cloison duquel les éléments de fixation (32) ressortent, au moins l'un d'es éléments de fixation (32), toutefois de préférence tous les deux, étant monté/montés translatables dans la cloison dans la direction de l'élasticité.

22. Chaîne anti-dérapante selon la revendication 21, caractérisée en ce que le boîtier de l'élément amortisseur (30) se compose de deux demi-coquilles (34, 35) solidarisées l'une avec l'autre et réalisées de préférence en matière synthétique, et en ce que chacun des éléments de fixation (32) comporte une tige (31) orientée dans la direction de l'élasticité et passant par une ouverture (33) réalisée dans les demi-coquilles (34, 35) et dimensionnée pour être ajustée avec jeu sur la tige.

FIG. 1

FIG. 2

EP 0 385 057 B1

FIG. 5

FIG. 10

FIG. 3

FIG. 4

FIG. 7

FIG. 9

FIG. 6

FIG. 8

EP 0 385 057 B1